# EUROPÄISCHE PATENTANMELDUNG

(11) **EP 0 827 821 A2**
(43) Veröffentlichungstag der Anmeldung: **11.03.1998**
(21) Anmeldenummer: 97115650.0
(22) Anmeldetag: 09.09.1997
(51) Int. Cl.: B28D 1/04, B23D 45/10

(54) **Verfahren und Steinsäge zum Auftrennen von Steinblöcken oder dergleichen**

(30) Priorität: 09.09.1996 DE 19636558
(71) Anmelder: Granitech D.D., Belgrad 11000 (YU)
(72) Erfinder: Köhler, Georg, Jun., 85718 Garching (DE)
(74) Vertreter: WILHELMS, KILIAN & PARTNER Patentanwälte

(57) **Zusammenfassung**

Verfahren und Steinsäge zum Auftrennen von Steinblöcken oder dergleichen, insbesondere von Natursteinblöcken. Zwei Sägeblätter 2 sind in der Trennebene einander gegenüber angeordnet und werden beim Auftrennen in eine derartige Pendelbewegung versetzt, daß ihr Eingriffspunkt am Steinblock von einer Stelle an den gegenüberliegenden Außenflächen jeweils bis zu einer Stelle an der Vorderseite wandert. Die Pendelbewegungen der beiden Sägeblätter 2 erfolgen zueinander um 180° phasenverschoben, was dadurch erreicht wird, daß die Sägeblätter 2 an Schwingen 5 angeordnet sind, die an eine Pendelachse 3 angelenkt sind, und eine Schwinge 5 mit einem entsprechenden Antrieb 7 versehen und über eine Kopplungsachse 6 fest mit der anderen Schwinge 5 gekoppelt ist. Die Anordnung ist derart, daß die Verbindungslinie zwischen den Pendelachsen 3 der Schwingen 5 sowie die Linie, die durch eine Pendelachse 3 einer Schwinge 5 und die Rotationsachse des zugehörigen Sägeblattes 2 geht, und die Linie, die durch die Pendelachse 3 der anderen Schwinge 5 und die Rotationsachse des anderen Sägeblattes 2 geht, ein Dreieck bilden, dessen Scheitel in der Mittellage der Pendelbewegung auf der Mittelebene des Steinblockes 1 liegt, wobei der Steinblock 1 gegen den Scheitel dieses Dreiecks zugestellt wird.

## Beschreibung

Die Erfindung betrifft ein Verfahren und eine Steinsäge zum Auftrennen von Steinblöcken oder dergleichen, insbesondere von Natursteinblöcken, mit wenigstens einer Sägeblatteinrichtung.

Steinblöcke, insbesondere Natursteinblöcke, werden bisher mittels Gattersägen, Seilsägen oder mit Diamantsägeblättern in Maßblöcke oder Platten mit ebenen glatten Flächen aufgetrennt.

Ein Diamantsägeblatt besteht aus einem runden Kernblatt, dessen Dicke vom Blattdurchmesser abhängig ist, und aus Schneidsegmenten, die in definierten Abständen am Umfang des Kernblattes angeordnet sind und die Schnittbreite bestimmen. Diese Schneidsegmente bestehen aus einem Trägermaterial, d.h. der Matrix, in das Schneiddiamanten eingebettet sind. In Abhängigkeit von dem aufzutrennenden Material, von den technischen Parametern der mit einem derartigen Diamantsägeblatt arbeitenden Kreissäge und von den technischen Anforderungen variiert die Zusammensetzung der Schneidsegmente, d.h. die Mischung aus dem Trägermaterial und dem Anteil der Diamanten.

Beim Auftrennen eines Steinblockes und insbesondere eines Natursteinblockes kommt es darauf an, zwischen der wirksamen Schneidfläche, dem Anpreßdruck des Werkzeuges und der Erwärmung der Schneidsegmente und/oder des Sägeblattes ein Optimum zu erzielen, um den Trennvorgang effektiv und wirtschaftlich zu gestalten. Dabei ist die Schneidfläche das Produkt aus dem Bogenmaß des mit dem Material des Steinblockes in Eingriff stehenden Kreissegmentes des Sägeblattes und der Breite der Schneidsegmente, d.h. der Schnittbreite des Sägeblattes. Je größer die Schneidfläche ist, um so großer ist zwar die Schneidwirkung, desto größer ist aber auch die Gesamtkraft zum Anpressen des Werkzeuges. Allerdings kann die Schneidfläche bei Diamantsägeblättern auch nicht beliebig groß gewählt werden, was im wesentlichen die folgenden Gründe hat:

Beim Auftrennen erwärmen sich die Schneidsegmente auf dem Sägeblatt. Je größer die Schneidfläche eines Sägeblattes, d.h. je länger der mit dem Steinblock in Eingriff stehende Sägeblattabschnitt ist, um so länger ist jedes Schneidsegment im Einsatz und um so stärker erwärmt es sich dadurch. Das kann trotz zusätzlicher Kühlung zu einem Aufschmelzen des Trägermaterials und damit zum Herausbrechen der Diamanten und zu einer Unwucht im Sägeblatt bzw. sogar zu dessen Zerstörung führen.

Zweitens sind bei großen Schneidflächen auch große Anpreßkräfte erforderlich, um einen für die Schneidwirkung des Sägeblattes bzw. der Schneidsegmente ausreichend großen, partiellen Anpreßdruck zu erzielen. Die Anpreßkraft wird durch die Vorschubbewegung der Maschine bzw. des Steinblockes erzeugt. Durch die entsprechenden Maschinenparameter werden sowohl die Kraft als auch die mögliche Schneidfläche bestimmt und begrenzt. Große Anpreßdrücke bewirken eine verstärkte Erwärmung der Schneidsegmente und der Sägeblätter.

Der dritte Grund dafür, daß die Schneidfläche bei Diamantsägeblättern nicht beliebig groß gewählt werden kann, besteht darin, daß beim Auftrennen das anfallende Steinmehl oder der anfallende Steinstaub bei langen Schneidflächen nicht ausreichend aus dem Schlitz oder der Trennfuge herausgetragen wird und darin einen zusätzlichen Verschleiß am Werkzeug bewirkt. Das hat zur Folge, daß das Selbstschärfen des Sägeblattes nicht mehr funktioniert und die Schneidleistung des Sägeblattes abnimmt.

Aus dem obigen ist ersichtlich, daß u.a. die Standzeit des Werkzeuges und die Wirksamkeit des Trennvorganges im wesentlichen davon bestimmt sind, wieviel Wärme die Schneidsegmente aufnehmen und abführen bzw. wie lange sie einer Überhitzung Widerstand leisten können, ohne zerstört zu werden. Da das Trägermaterial nur in ganz bestimmten Grenzen abgewandelt werden kann, muß die Erwärmung durch die Ausbildung des Trennvorganges selbst gesteuert werden. Dabei können der Anpreßdruck und die Größe der Schneidfläche am Diamantsägeblatt durch die Vorschubgeschwindigkeit und die Zustellung bestimmt werden. Das Produkt aus diesen beiden Werten ergibt die Zeitspanfläche, deren Größe von dem jeweiligen Steinblockmaterial und von den eingesetzten Diamantsägeblättern, insbesondere von den gewählten Schneidsegmenten abhängt.

Mit Diamantsägeblättern können aus den obigen Gründen insbesondere Natursteinblöcke nicht mit einem Schnitt über die gesamte Schnittiefe durchtrennt werden. Vielmehr muß das Auftrennen in mehreren Stufen erfolgen.

Es ist beispielsweise bekannt, durch mehrmaliges Hin- und

Herfahren eines Diamantsägeblattes bzw. mehrerer nebeneinander angeordneter Diamantsägeblätter einen oder mehrere Schnitte nebeneinander in einem Steinblock schrittweise durch mehrmaliges Zustellen des Sägeblattes bzw. des Sägeblattpaketes auszubilden und bis zur vollständigen Trennung des Steinblockes zu vertiefen. Dabei wird das Werkzeug auf Führungsbahnen über den Steinblock geführt. Da die Steinblöcke somit einzeln unter der Maschine aufgestellt und bearbeitet werden, ist ein kontinuierlicher Durchlauf der Steinblöcke nicht möglich. Darüber hinaus ist in Abhängigkeit von der Steinblockhöhe ein Werkzeug mit entsprechend großem Durchmesser von bis zu 5000 mm erforderlich. Größere Blöcke müssen in einem zweiten Arbeitsschritt umgedreht und erneut ausgerichtet werden, ein Beispiel dafür ist in der DE-OS-26 55 375 beschrieben. Diese Arbeitsweise ist sehr aufwendig. Da darüber hinaus ein Diamantsägeblatt mit großem Durchmesser zur Gewährleistung seiner Festigkeit und Stabilität eine große Kernstärke sowie eine hohe Segmentbreite besitzen muß, sind die Schneidbreite eines derartigen Blattes, sein Zerspanungsvolumen und sein spezifischer Energiebedarf sehr hoch. Das gilt auch für die Werkzeugkosten und die Schnittverluste.

Aus der DE-PS-36 34 963 und der US-PS-3 815 570 ist es weiterhin bekannt, einen Steinblock mit zwei in der Trennebene angeordneten Sägeblättern bzw. bei Multiblattmaschinen mit Sägeblattpaketen aufzutrennen. Die einander in der Trennebene gegenüberliegenden Sägeblätter oder Sägeblattpakete erzeugen dabei einen Schnitt von beiden gegenüberliegenden Seiten des Steinblockes beginnend, wobei in der Regel jedes Sägeblatt oder jedes Sägeblattpaket die Hälfte der gesamten Schnittiefe übernimmt. Die Zustellung kann sowohl mittels des oder der Werkzeuge als auch mittels des Werkstückes, d.h. des Steinblockes erfolgen. Auch bei einem derartigen Verfahren können Schnitte über die gesamte Steinblockhöhe, insbesondere bei Natursteinblöcken, nur durch eine schrittweise erfolgende Vertiefung des Trennschnittes erzielt werden, wie es in der DE-OS-44 08 266 dargestellt ist. Gegenüber den Einblattsägen kommen bei diesem Verfahren Sägeblätter mit kleineren Durchmessern und schmaleren Schneidsegmenten zum Einsatz, wodurch Schnittbreite, Zerspannungsvolumen und spezifischer Energiebedarf gesenkt werden können. Aber auch dabei ist kein kontinuierlicher Blockdurchlauf möglich, lediglich beim Trennen von dünnen Platten ist ein kontinuierliches Arbeiten im Durchlaufbetrieb denkbar.

Es sind darüber hinaus Mehrblattsägemaschinen, nämlich Multispindelmaschinen, beispielsweise aus der DE-AS-27 21 941, bekannt, die mit mehreren Diamantsägeblättern bzw. Diamantsägeblattgruppen ausgestattet sind, die in Durchlaufrichtung des Steinblockes hintereinander mit zunehmendem Durchmesser angeordnet sind. Diese Maschinen arbeiten so, daß die ersten Sägeblätter in den durchlaufenden Steinblock Führungsschlitze schneiden, die durch die nachfolgenden Sägeblätter mit größerem Durchmesser vertieft werden, bis die letzten Sägeblätter mit dem größten Durchmesser den Steinblock vollständig durchtrennen. Da die größeren Sägeblätter in den vorher geschnittenen Schlitzen geführt werden, können Kernstärke und Segmentbreite geringer gewählt und auf die Sägeblätter mit den kleineren Durchmessern abgestimmt werden. Mit derartigen Maschinen ist zwar ein kontinuierliches Trennen von Steinblöcken möglich, eine praktische Anwendung beim Trennen von Natursteinblöcken, insbesondere aus Granit, ist jedoch nur für kleine Blockhöhen denkbar. Wenn davon ausgegangen wird, daß die praktisch mögliche Schnittiefe, d.h. die Zustellung der einzelnen Sägeblätter, die von der Zusammensetzung der Schneidsegmente und vom zu schneidenden Material abhängig ist, 20 mm beträgt, so sind für eine Steinblockhöhe von 300 mm mindestens 15 Sägeblätter, beim Auftrennen von einer Seite und mindestens 8 Sägeblattpaare beim Auftrennen von zwei Seiten erforderlich. Dadurch, daß diese Sägeblätter bzw. Sägeblattgruppen hintereinander angeordnet werden müssen, ergibt sich eine Maschine mit außerordentlich großen Abmessungen, wobei die Vielzahl der erforderlichen Sägeblätter,insbesondere der Blätter mit verschiedenen Durchmessern, hohe Werkzeugkosten verursacht.

D.h., daß die bekannten Verfahren einige Nachteile haben, die bei Einblattsägen darin zu sehen sind, daß große Sägeblätter erforderlich sind, die hohe Werkzeugkosten und wegen der großen Schnittbreiten ein hohes Zerspanungsvolumen und einen hohen spezifischen Energiebedarf sowie weniger nutzbare Schnittware verursachen. Es können Diamantsägeblätter mit kleinerem Durchmesser eingesetzt werden, wenn in der Schnittebene gegenüberliegende Sägeblätter vorgesehen werden. Das läßt allerdings keine großen Gesamtschnittiefen zu. In beiden Fällen muß aber das Sägeblatt oder müssen die Sägeblätter bzw. in Ausnahmefällen die Blöcke horizontal und längs der zu schneidenden Fläche hin und her verfahren werden, was in der Praxis lange Führungsbahnen erforderlich macht, die durch den Vorschub und den Richtungswechsel große dynamische Kräfte aufnehmen müssen. Ein Trennen von Natursteinblöcken, beispielsweise Granitblöcken, ist nur diskontinuierlich möglich. Das bedeutet, daß für den Blockaufbau Rüstzeiten erforderlich sind, die die Trennleistung der Maschine beeinträchtigen. Das beschriebene Mehrspindel- bzw. Mehrblattverfahren erfordert andererseits große Maschinen mit einer Vielzahl von Diamantsägeblättern, was in der Praxis nur in begrenztem Umfang sinnvoll einsetzbar ist.

Durch die Erfindung sollen daher ein Verfahren und eine Steinsäge zum Auftrennen von Steinblöcken der eingangs genannten Art geschaffen werden, mit denen die Steinblöcke unter optimaler Ausnutzung der Zeitspanfläche der Sägeblätter aufgetrennt werden können, wobei die Steinsäge möglichst kleine Abmessungen und einen möglichst einfachen Aufbau haben soll. Vorzugsweise sollen das Verfahren und die Steinsäge so ausgebildet sein, daß ein Trennen der Steinblöcke kontinuierlich im Durchlaufbetrieb möglich ist.

Dazu sind das erfindungsgemäße Verfahren und die erfindungsgemäße Steinsäge so ausgebildet, wie es im Patentanspruch 1 bzw. im Patentanspruch 3 angegeben ist.

Bei dem erfindungsgemäßen Verfahren und der erfindungsgemäßen Steinsäge steht die Sägeblatteinrichtung nur annähernd punktförmig und stehen die einzelnen Schneidsegmente der Sägeblatteinrichtung damit nur kurzzeitig mit dem zu schneidenden Material in Eingriff, wodurch die Erwärmung der Schneidsegmente verringert ist und die Geschwindigkeit der Pendelbewegung der Sägeblatteinrichtung sowie die Zustellung zwischen den Steinblöcken und der Sägeblatteinrichtung bei Zugrundelegung der Zeitspanfläche der Sägeblatteinrichtung in Abhängigkeit vom zu schneidenden Material in einem großen Bereich variiert werden können. Mit einer kleineren Schneidfläche wird ein größerer partieller Anpreßdruck erzielt, was eine höhere Trennleistung zur Folge hat. Die Zustellung zwischen den Steinblöcken und der Sägeblatteinrichtung kann stufenförmig oder kontinuierlich erfolgen, so daß bei einer stufenförmigen Zustellung die jeweilige Schrittgröße bzw. bei einer kontinuierlichen Zustellung die Zustellgeschwindigkeit variiert werden kann.

Der Grundgedanke des erfindungsgemäßen Verfahrens und der erfindungsgemäßen Steinsäge besteht somit darin, daß die Rotation der Sägeblatteinrichtung durch eine Pendelbewegung über einen Kreisbogen überlagert wird, dessen Radius größer als der Radius der Sägeblatteinrichtung ist.

Besonders bevorzugte Weiterbildungen des erfindungsgemäßen Verfahrens und der erfindungsgemäßen Steinsäge sind Gegenstand der Patentansprüche 2 bzw. 4 bis 6.

Im folgenden wird anhand der zugehörigen Zeichnung ein besonders bevorzugtes Ausführungsbeispiel der Erfindung näher beschrieben. Es zeigen
Fig. 1 eine schematische Ansicht eines Sägeblattpaares zur Verwendung bei dem erfindungsgemäßen Verfahren,
Fig. 2 eine Seitenansicht auf ein Ausführungsbeispiel der erfindungsgemäßen Steinsäge,
Fig. 3 eine Schnittansicht der erfindungsgemäßen Steinsäge und
Fig. 4a bis 4e den Ablauf des erfindungsgemäßen Verfahrens und die Arbeitsweise der erfindungsgemäßen Steinsäge, aufgeteilt in verschiedene Phasen.

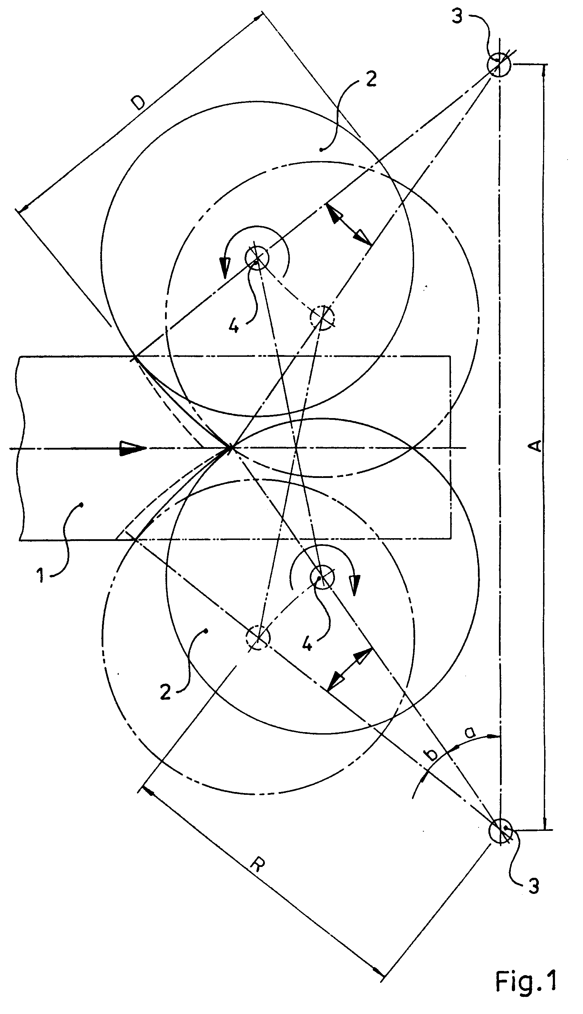

Wie es in Fig. 1 dargestellt ist, sind zwei kreisrunde Sägeblätter 2 in der Trennebene zum Auftrennen eines Steinblockes 1 angeordnet. Die Trenn- und Anordnungsebene der Sägeblätter 2 ist beispielsweise eine vertikale Ebene. Es ist aber auch eine Trennung in einer horizontalen Ebene denkbar. Es können mehrere Paare derartiger Sägeblätter 2 auf einer gemeinsamen Welle 4 nebeneinander angeordnet sein, um gleichzeitig den Steinblock 1 in mehreren Ebenen aufzutrennen.

Die Rotationsachsen der Wellen 4 verlaufen parallel zueinander, so daß die Sägeblätter 2 in derselben Ebene oberhalb bzw. unterhalb des Steinblockes 1 einander gegenüberliegen. Jede Welle 4 wird von einem Motor angetrieben, mit dem sie über geeignete Übertragungselemente verbunden ist.

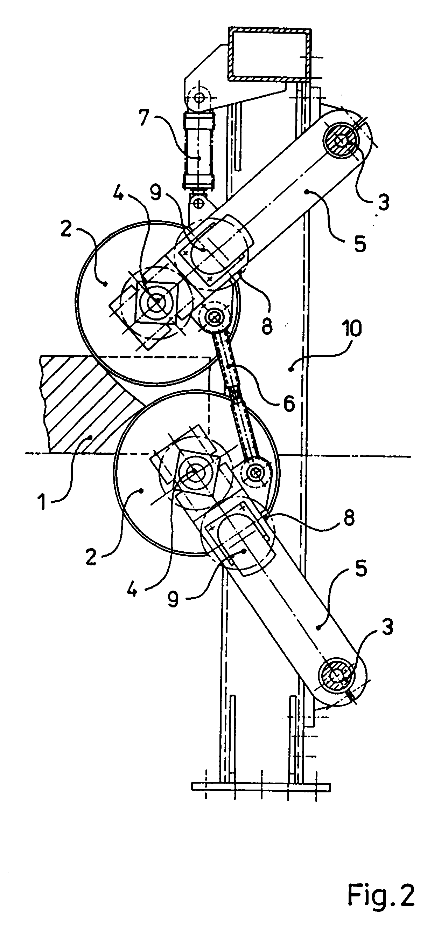

Die Wellen 4 sind an einem Ende einer Schwinge 5 (Fig. 2) jeweils drehbar gelagert, die an ihrem anderen Ende schwenkbar angelenkt ist. Beim Auftrennen des Steinblockes 1 werden die Sägeblätter 2 in eine Pendelbewegung um den Drehpunkt oder die Pendelachse 3 ihrer Schwingen 5 versetzt, daß ihr Angriffspunkt am Steinblock 1 über einen Kreisbogen, dessen Radius größer als der der Sägeblätter 2 ist, von einer Stelle an den gegenüberliegenden Außenflächen, d.h. der Ober- und der Unterfläche in Fig. 1 nach innen in Richtung auf die Längsachse des Blockes bis zu einer Stelle an der Vorderseite des Steinblockes 1, an der sich die Pendelbewegungsbahnen schneiden, wandert, wobei die Pendelbewegungen der beiden Sägeblätter 2 derart bewirkt werden, daß sie um 180° zueinander phasenverschoben erfolgen. Das kann beispielsweise über eine entsprechende Kopplung der Pendelbewegungen der beiden Schwingen 5 erzielt werden. Eine derartige Pendelbewegung führt dazu, daß dann, wenn der Angriffspunkt eines Sägeblattes 2 an einer Außenfläche des Steinblockes 1 liegt, wie es beispielsweise bei dem oberen Sägeblatt 2 in Fig. 1 der Fall ist, der Angriffspunkt des anderen Sägeblattes, nämlich des unteren Sägeblattes in Fig. 1, an der Vorderseite des Steinblockes 1 liegt. Beim anschließenden Pendeln der beiden Sägeblätter 2 kehren sich die Verhältnisse um, bis eine Anordnung erreicht ist, die in Fig. 1 in unterbrochenen Linien dargestellt ist. In dieser Weise wird der Steinblock 1 beim Zuführen in der Richtung des Pfeiles in Fig. 1 abwechselnd von außen nach innen von den beiden Sägeblättern 2 an der Vorderseite bearbeitet, was zur Folge hat, daß er kontinuierlich durchgeführt werden kann, und somit mehrere Blöcke hintereinander bearbeitet, d.h. fortlaufend aufgetrennt werden können.

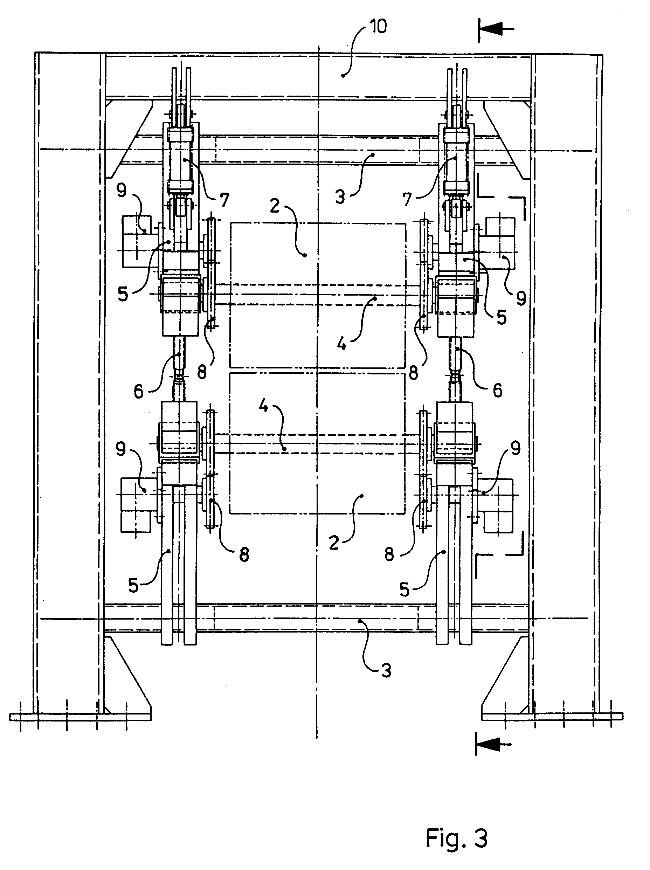

In den Fig. 2 und 3 ist ein konkretes Ausführungsbeispiel einer Steinsäge dargestellt, die nach dem anhand von Fig. 1 beschriebenen Verfahren arbeitet.

Wie es insbesondere in Fig. 2 dargestellt ist, sind die auf den Wellen 4 sitzenden Sägeblätter 2 mit ihren zugehörigen Antriebsmotoren und Übertragungselementen jeweils an einem Ende der Schwingen 5 angebracht, die an ihrem anderen Ende an den Pendelachsen 3 angelenkt sind. Zur Kopplung der Schwenkbewegungen ist eine Kopplungsstange 6 zwischen den beiden Schwingen 5 angeordnet. Die Kopplungsstange 6 muß so lang sein, daß sich die in der Trennebene gegenüberliegenden Sägeblätter 2 in keiner Phase ihrer Schwenkbewegung berühren können. Eine der beiden Schwingen 5, d.h. in Fig. 2 die obere Schwinge 5, ist mit einem geeigneten Antrieb 7, beispielsweise einem Zylinder, einem Kurbeltrieb oder einer Kurvenscheibe verbunden, der diese Schwinge 5 und über die Kopplungsstange 6 die zweite Schwinge 5 in eine hin- und hergehende Pendelbewegung versetzt. Die Rotationsachsen der Sägeblätter 2 beschreiben dadurch eine kreisförmige Bewegung.

Der Abstand zwischen der Pendelachse 3 der Schwingen 5 und dem Mittelpunkt des jeweiligen Sägeblattes 2 ist größer als der halbe Durchmesser des Sägeblattes 2, der wiederum von der maximalen Schnittiefe bestimmt ist. In Abhängigkeit von diesem Abstand und dem Durchmesser der Sägeblätter 2 ist der Abstand der Schwenkachsen 3 der Schwingen 5 am Grundgestell 10 der Säge so gewählt, daß die Sägeblätter 2 den aufzutrennenden Steinblock über die Breite des Schnittes stets nur annährend linienförmig berühren, wobei in einer Seitenansicht diese Linie als Punkt erscheint. Dieser Punkt liegt auf der verlängerten Verbindungslinie zwischen der Schwenkachse 3 der Schwinge 5 und der Rotationsachse des Sägeblattes 2. In der Praxis besteht zwar kein reiner linienförmiger bzw. punktförmiger Kontakt, sondern ein quasi-linienförmiger oder quasi-punktförmiger Kontakt mit einer geringen Erstreckung in Richtung der Schwenkbewegung der Sägeblätter 2, die Größe dieser Erstreckung hängt von der Zustellung, d.h. von der Vorschubewegung des Steinblockes 1 und damit von der Andruckkraft ab. Die Kontaktlinie bzw. der Kontaktpunkt wandert bei einem Schwenken der Sägeblätter 2 über die Schnittkurve, wobei diese Schwenkbewegung einen kleinen Winkel überstreicht und die Winkelgeschwindigkeit einstellbar ist. Die Zustellung des Steinblockes 1 erfolgt über geeignete Fördereinrichtungen, die den Steinblock durch die Maschine hindurch transportieren. Die Zustellung kann schrittweise oder kontinuierlich erfolgen, ihre Geschwindigkeit ist stufenlos verstellbar. Die beiden Sägeblätter 2 übernehmen beim Auftrennen jeweils etwas mehr als die Hälfte der erforderlichen Gesamtschnittiefe des Steinblockes 1.

Der Durchmesser der Sägeblätter 2 hängt insbesondere von der Größe des aufzutrennenden Steinblockes 1 ab, der Abstand zwischen der Pendelachse 3 der Schwinge 5 und der Rotationsachse der Sägeblätter 2 liegt dabei vorzugsweise zwischen dem 1,0- und dem 1,5-fachen des Sägeblattdurchmessers.

Die Lage der Schwenkachsen 3 der Schwingen 5 sowie der Abstand der Schwenkachsen 3 zueinander wird in Abhängigkeit vom Durchmesser der Sägeblätter 2 und vom Abstand zwischen der Rotationsachse der Sägeblätter 2 und der Schwenkachse 3 der Schwingen 5 so festgelegt, daß die Verbindungslinie zwischen den Pendelachsen 3 und die Linien, die jeweils durch die Pendelachsen 3 und die Rotationsachsen der Sägeblätter 2 gehen, ein Dreieck bilden. Die Zustellung des Steinblockes 1 erfolgt in einer Richtung gegen den Scheitel dieses Dreiecks, so daß der Steinblock 1 von seiner Stirnseite aus aufgetrennt wird.

Wie es weiterhin in den Fig. 2 und insbesondere in Fig. 3 dargestellt ist, sind am Grundgestell 10 der Steinsäge zwei Achsen, nämlich eine obere und eine untere Pendelachse 3 drehbar gelagert, auf denen jeweils zwei Schwingen 5 mit ihrem einen Ende fest oder verschiebbar montiert sind. Am anderen Ende der Schwingen 5 nehmen geeignete Schnellspannvorrichtungen die Lager der parallel zueinander angeordneten Sägeblattwellen 4 auf. Die Spannvorrichtungen könne hydraulisch, pneumatisch oder mechanisch betätigt werden. Auf den Sägeblattwellen 4 ist ein oder sind vorzugsweise mehrere Diamantsägeblätter 2 in einem Paket angeordnet. Die Wellen 4 werden mittels geeigneter Übertragungselemente, die bei dem in Fig. 2 und 3 dargestellten Ausführungsbeispiel aus einem Zahnradpaar 8 bestehen, von einem Motor 9 angetrieben, der ebenfalls auf jeder Schwinge 5 montiert ist. Als Antriebe werden vorzugsweise Elektro- oder Hydraulikmotore eingesetzt. Vorzugsweise wird nur die obere Schwinge 5 durch einen geeigneten Antrieb 7 in eine hin- und hergehende pendelnde Bewegung versetzt, die über die in ihrer Länge verstellbare Kopplungsstange 6 auf die andere Schwinge 5 übertragen wird. Dadurch wird eine Parallelbewegung der Schwingen 5 in der gewünschten phasenverschobenen Beziehung ermöglicht. Mit Hilfe einer derartigen Kopplungsstange 6 können in Abhängigkeit vom Sägeblattdurchmesser und von der Höhe des zu schneidenden Steinblockes 1 die Abstände der Wellen 4 zueinander so eingestellt werden, daß die Sägeblätter 2 den Steinblock 1 in der oben beschriebenen Weise so kontaktieren, daß der Eingriffspunkt von der Außenseite bis zu einer Stelle an der Vorderseite wandert und der Steinblock 1 von vorne geschnitten wird. Die Lager der Pendelachse 3 der Schwingen 5 können weiterhin in ihrer Höhe verstellbar sein, um die Säge an die jeweilige Blockgröße anpassen zu können.

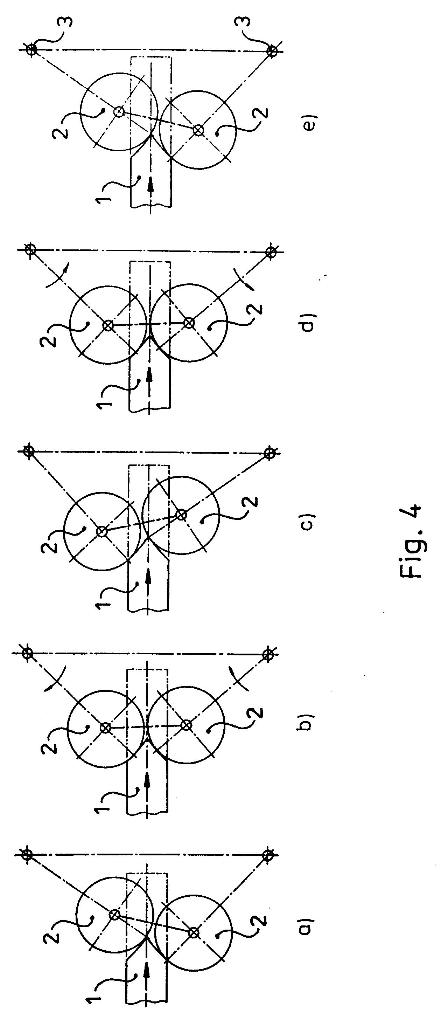

In Fig. 4 sind in einer schematischen Seitenansicht eines Steinblockes 1 und eines Paares von Sägeblättern 2 das obige Verfahren und der Arbeitsablauf der obigen Steinsäge in einzelnen Phasen unterteilt dargestellt.

Wie es in Fig. 4 dargestellt ist, pendeln die Sägeblätter 2 während des Trennvorganges zwischen zwei Positionen, nämlich einer inneren und einer äußeren Position hin und her. In Fig. 4a hat das untere Sägeblatt 2 seine äußere Position erreicht, in der es punktförmig mit einer Stelle an der Außenfläche des Steinblockes 1 in Eingriff steht, während gleichzeitig das obere Sägeblatt seine innere Position erreicht hat, an der es mit einer Stelle an der Stirnseite des Steinblockes 1 in Eingriff steht. Aufgrund der Pendelbewegung der beiden Sägeblätter 2 wandert gemäß Fig. 4b der Angriffspunkt der beiden Sägeblätter 2 von der in Fig. 4a dargestellten Stelle am unteren Sägeblatt 2 nach innen und am oberen Sägeblatt 2 nach außen. Fig. 4b zeigt annähernd eine Position in der Mitte der Pendelbewegung der beiden Sägeblätter 2, d.h. eine im wesentlichen zueinander symmetrische Position, in der der Schnittpunkt des Dreiecks, das von den Verbindungslinien der Pendelachsen 3 der Schwingen 5 und den Verbindungslinien zwischen einer Pendelachse 3 und der zugehörigen Rotationsachse des Sägeblattes 2 sowie der entsprechenden Verbindungslinie zwischen der anderen Pendelachse 3 und der Rotationsachse des anderen Sägeblattes 2 gebildet wird, auf der Mittelebene des Steinblockes 1 liegt. Ein Weiterpendeln der Sägeblätter 2 führt zu der Position, die in Fig. 4c dargestellt ist und eine Umkehrung der Position von Fig. 4a darstellt. In Fig. 4c befindet sich der Angriffspunkt des oberen Sägeblattes 2 an einer Außenfläche des Steinblockes 1, während sich der Angriffspunkt des unteren Sägeblattes 2 an der Stelle an der Vorderseite des Steinblockes 1 befindet. Das Rückpendeln der Sägeblätter 2 geht über die in Fig. 4d dargestellte Zwischenposition in die in Fig. 4e dargestellte Position zurück, die mit der in Fig. 4a dargestellten Position identisch ist.

Bei dem oben beschriebenen Ausführungsbeispiel wurde die Kupplung der Schwenkbewegungen der Sägeblätter 2 derart, daß diese um 180° phasenverschoben erfolgen, mittels einer in ihrer Länge verstellbaren Kopplungsstange 6 erzielt, die zwischen den beiden Schwingen 5 angeordnet ist. Eine derartige phasenverschobene Pendelbewegung der beiden Sägeblätter 2 kann jedoch auch kontaktlos über entsprechende Synchronisiereinrichtungen, beispielsweise Steuerkurveneinrichtungen oder elektrisch-elektronische Steuerungen, erzielt werden, wobei dann entsprechende Antriebseinrichtungen zum Erzeugen einer Pendelbewegung an jeder Schwinge 5 vorgesehen sein können.

Weiterhin ist es bevorzugt, den Steinblock 1 auf die Sägeblätter 2 zuzustellen, da dadurch ein kontinuierlicher Betrieb möglich ist und mehrere Steinblöcke 1 hintereinander aufgetrennt werden können. Es ist natürlich auch grundsätzlich möglich, die Sägeblätter 2 auf einen festliegenden Steinblock 1 zuzustellen, aufgrund der dabei erforderlichen Rückbewegung der Sägeblätter 2 zum Trennen des nächsten Blockes ist jedoch eine kontinuierliche Arbeitsweise nicht mehr ohne weiteres möglich.

In der Zeichnung sind beide Sägeblätter 2 oder beide Gruppen von Sägeblättern 2 der entsprechenden Sägeblattblöcke mit gleichem Durchmesser dargestellt. Das ist nicht unbedingt erforderlich, falls beispielsweise ein Natursteinblock 1 aufgetrennt werden soll, der auf einer Seite eine unebene Oberfläche hat, kann das Sägeblatt oder können die Sägeblätter auf dieser Seite einen größeren Durchmesser als auf der anderen Seite haben, dadurch verschiebt sich lediglich die in Fig. 1 dargestellte Mittelebene aus der Mitte des Steinblockes 1 zur Seite der unebenen Oberfläche hin heraus.

Wie es bereits erwähnt wurde, hängt die optimale Wahl der Größe der Sägeblätter 2, der Anordnung der Pendelachsen 3 der Schwingen 5, deren Länge, der Schwenkwinkel b der Pendelbewegung, der Winkel a zwischen der Verbindungslinie der Pendelachsen 3 und der Verbindungslinie zwischen einer Pendelachse 3 und der Rotationsachse eines Sägeblattes 2 in der innersten Position sowie die Länge der Kopplungsstange 6 von der Größe des zu schneidenden Steinblocke 1 ab. Als ein Beispiel sei angegeben, daß bei einem Durchmesser D der Sägeblätter 2 von 800 mm der Winkel a weniger als 35° beträgt, wobei der Schwenkwinkel b vorzugsweise bei etwa 14° liegt.

Bei größeren Sägeblattdurchmessern sollte ein noch kleinerer Winkel a gewählt werden, um zu erreichen, daß sich beide Sägeblätter 2 in keiner Phase ihrer Pendelbewegung berühren. Das hängt jedoch natürlich von den Abmessungen der Gesamtmaschine, insbesondere auch von dem Abstand zwischen den Pendelachsen 3, ab. Weiterhin ist die Länge der Kopplungsstange 6 so gewählt, daß der Abstand zwischen den beiden Rotationsachsen der Sägeblattwellen 4 größer als die Summe der Radien der beiden Sägeblätter 2 ist. In dieser Weise wird erreicht, daß sich die Sägeblätter 2 an keiner Stelle ihrer Bewegungsbahn berühren und solange wie möglich mit dem Material des Steinblockes 1 in Eingriff stehen. Das hat kurze Leerlaufzeiten zur Folge. Da dann, wenn eines der beiden Sägeblätter 2 seine unterste Endposition erreicht hat und mit ihrem Eingriffspunkt aus dem Steinblock 1 austritt, das obere Sägeblatt 2 seine unterste Position in der Mitte des zu schneidenden Steinblockes 1 erreicht, und umgekehrt. Am Eingriffspunkt jedes Sägeblattes 2 wird Material abgetragen und der Schnitt vertieft. Durch die Schwenkbewegung der Sägeblätter 2 entstehen dabei in der Seitenansicht kreisbogenförmige Schnittlinien für jedes Sägeblatt, die zwischen den beiden Sägeblättern 2 einen Keil bilden, wie es in Fig. 1 dargestellt ist. Durch die Überlagerung der Zustellbewegung des Steinblockes 1 mit den Schwenkbewegungen der Sägeblätter 2 entsteht dieser Materialkeil, der durch die Sägeblätter 2 nach und nach abgetragen wird.

Die Optimierung der oben angegebenen Parameter, die in Abhängigkeit von dem Material und der Größe des aufzutrennenden Steinblockes und anderer technischer Umstände einstellbar sind, ist mit einfachen geometrischen Überlegungen möglich und kann in Abhängigkeit von den sonstigen Erfordernissen erfolgen.

## Patentansprüche

1. Verfahren zum Auftrennen von Steinblöcken oder dergleichen, insbesondere von Natursteinblöcken, mit wenigstens einer Sägeblatteinrichtung, dadurch gekennzeichnet, daß die Sägeblatteinrichtung beim Auftrennen in eine Pendelbewegung über einen Kreisbogen, dessen Radius größer als der Radius der Sägeblatteinrichtung ist, versetzt wird, derart, daß ihr Angriffspunkt am Steinblock von einer Stelle an der einen Außenfläche bis zu einer Stelle an der anderen Außenfläche wandert.

2. Verfahren nach Anspruch 1, bei dem die Sägeblatteinrichtung aus wenigstens einem Paar von kreisrunden rotierenden Sägeblättern besteht, die in derselben Ebene angeordnet sind, dadurch gekennzeichnet, daß die Sägeblätter jeweils in eine Pendelbewegung versetzt werden, derart, daß ihr Angriffspunkt am Steinblock von einer Stelle an den gegenüberliegenden Außenflächen nach innen in Richtung auf die Längsachse des Steinblockes bis zu einer Stelle an der Vorderseite des Steinblockes, an der sich die Pendelbewegungsbahnen der Sägeblätter schneiden, wandert, wobei die Pendelbewegungen der beiden Sägeblätter des Paares um 180° zueinander phasenverschoben bewirkt werden.

3. Steinsäge zum Auftrennen von Steinblöcken oder dergleichen, insbesondere von Natursteinblöcken, zur Durchführung des Verfahrens nach Anspruch 1 mit einer Sägeblatteinrichtung und einer Einrichtung zum gegenseitigen Zustellen der Steinblöcke und der Sägeblatteinrichtung, dadurch gekennzeichnet, daß die Sägeblatteinrichtung (2) mit ihrer Welle (4) an einem Ende einer Schwingeneinrichtung (5) angeordnet ist, deren Länge größer als der Radius der Sägeblatteinrichtung (2) ist und deren anderes Ende an eine Pendelachse (3) angelenkt ist, und eine Einrichtung vorgesehen ist, die die Schwingeneinrichtung (5) in eine Pendelbewegung über einen Kreisbogen um ihre Pendelachse (3) versetzt.

4. Steinsäge nach Anspruch 3, dadurch gekennzeichnet, daß die Sägeblatteinrichtung (2) aus wenigstens einem Paar von kreisrunden rotierenden Sägeblättern besteht, die mit ihrer Welle (4) an einem Ende von Schwingen (5) jeweils angeordnet sind, deren anderes Ende an einer Pendelachse (3) jeweils angelenkt ist, wobei die Verbindungslinie der Pendelachsen (3) der Schwingen (5) und die durch die Pendelachse (3) einer Schwinge (5) und die Welle (4) des zugehörigen Sägeblattes (4) führende Linie sowie die durch die Pendelachse (3) der anderen Schwinge (5) und die zugehörige Welle (4) des anderen Sägeblattes (2) führende Linie ein Dreieck bilden und die Zustelleinrichtung so ausgebildet ist, daß die Zustellung gegen den Scheitel des Dreiecks erfolgt, und eine Antriebseinrichtung vorgesehen ist, die die Sägeblätter (2) in um 180° zueinander phasenverschobene Pendelbewegungen um die Pendelachsen (3) der Schwingen (5) zwischen einer Angriffsstelle an den gegenüberliegenden Außenflächen des Steinblockes jeweils nach innen in Richtung auf die Längsachse des Steinblockes (1) bis zu einer Stelle an der Vorderseite des Steinblockes (1) versetzt, an der sich die Pendelbewegungsbahnen der Sägeblätter (2) schneiden.

5. Steinsäge nach Anspruch 4, dadurch gekennzeichnet, daß die Antriebseinrichtung aus einer Antriebseinheit (7) an einer Schwinge (5) und einer Kopplungsstange (6) besteht, die zwischen beiden Schwingen (5) angeordnet ist.

6. Steinsäge nach Anspruch 3, dadurch gekennzeichnet, daß mehrere Sägeblatteinrichtungen (2) in Paketen auf einer für jedes Paket gemeinsamen Welle (4) angeordnet sind.
